# EUROPÄISCHE PATENTSCHRIFT

(11) **EP 2 092 032 B1**
(45) Veröffentlichungstag und Bekanntmachung des Hinweises auf die Patenterteilung: **24.03.2010**
(21) Anmeldenummer: 07822535.6
(22) Anmeldetag: 13.11.2007
(51) Int. Cl.: C09J 5/08

(54) **VERFAHREN ZUM VERKLEBEN VON OBERFLÄCHEN MIT SCHÄUMBAREN MISCHUNGEN ENTHALTEND ALKOXYSILANTERMINIERTE PREPOLYMERE**
METHOD OF BONDING SURFACES USING FOAMABLE MIXTURES CONTAINING ALKOXYSILANE-TERMINATED PREPOLYMERS
PROCÉDÉ POUR LE COLLAGE DE SURFACES AVEC DES MÉLANGES MOUSSANTS CONTENANT DES PRÉPOLYMÈRES À TERMINAISON ALCOXYSILANE

(30) Priorität: 16.11.2006 DE 102006054155
(43) Veröffentlichungstag der Anmeldung: 26.08.2009
(73) Patentinhaber: Wacker Chemie AG, 81737 München (DE)
(72) Erfinder: STANJEK, Volker, 84539 Ampfing (DE)
(74) Vertreter: Fritz, Helmut
(86) Internationale Anmeldenummer: PCT/EP2007/062261
(87) Internationale Veröffentlichungsnummer: WO 2008/058955

(56) Entgegenhaltungen:
- WO-A-02/34838
- WO-A-2004/046218
- DE-A1- 19 831 285
- JP-A- 59 172 577

## Beschreibung

Die Erfindung betrifft ein Verfahren zum Verkleben von Oberflächen mit einem Schaum aus einer schäumbaren Mischung enthaltend alkoxysilanfunktionelle Prepolymere.

Prepolymersysteme, die über reaktive Alkoxysilylgruppen verfügen, sind seit langem bekannt und werden vielfach zur Herstellung von elastischen Dicht- und Klebstoffen im Industrie- und Baubereich verwendet, siehe z.B. WO 2004/046218 A1. In Gegenwart von Luftfeuchtigkeit und geeigneten Katalysatoren sind diese alkoxysilantermierten Prepolymere bereits bei Raumtemperatur in der Lage, unter Abspaltung der Alkoxygruppen und Ausbildung einer Si-O-Si-Bindung miteinander zu kondensieren. Somit lassen sich diese Prepolymere u.a. als einkomponentige Systeme verwenden, welche den Vorteil einer einfachen Handhabung besitzen, da keine zweite Komponente zudosiert und eingemischt werden muß.

Ein weiterer Vorteil von alkoxysilanfunktionellen Prepolymeren besteht in der Tatsache, dass bei der Härtung weder Säuren noch Oxime oder Amine freigesetzt werden. Außerdem entsteht anders als bei Kleb- oder Dichtstoffen auf Isocyanatbasis kein gasförmiges CO₂, durch dessen Entstehung nach dem Verkleben von Bauteilen die Klebemasse nachträglich noch expandieren würde. Des Weiteren sind alkoxysilanfunktionelle Prepolymermischungen im Gegensatz zu isocyanatbasierenden Systemen toxikologisch unbedenklich.

Bei einem besonders vorteilhaften Typ von alkoxysilanfunktionellen Prepolymeren handelt es sich um alkoxysilanterminierte Prepolymere. Diese können aus unterschiedlichen Bausteinen aufgebaut sein. Üblicherweise besitzen diese Prepolymere ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben u.a. in EP 0 372 561, WO 00/37533 oder US 6,207,766. Daneben sind aber auch Systeme weit verbreitet, deren Rückgrat ganz oder zumindest zum Teil aus Organosiloxanen besteht, beschrieben u.a. in WO 96/34030.

Bei einem besonders vorteilhaften Herstellverfahren für alkoxysilanterminierte Prepolymere wird von Polyolen, z.B. von Polyether- oder Polyesterpolyolen, ausgegangen, die in einem ersten Reaktionsschritt mit einem Überschuß eines Di- oder Polyisocyanates umgesetzt werden. Anschließend werden die dabei erhaltenen isocyanatterminierten Prepolymere mit aminoalkylfunktionellen Alkoxysilanen zu dem gewünschten alkoxysilanterminierten Prepolymer umgesetzt. Alternativ können alkoxysilanterminierte Prepolymere auch hergestellt werden, indem ein Polyol oder ein OH-funktionktionelles Polyurethan, wie es durch die Reaktion von Polyolen mit einem Unterschuss an Di- oder Polyisocyanaten herstellbar ist, mit einem isocyanatoalkylfunktionellen Alkoxysilan umgesetzt wird. Diese Herstellverfahren sind beispielsweise in EP 1 421 129 oder WO 2005/000931 beschrieben. Auch weitere Herstellverfahren, z.B. die in WO 02/34838 beschriebene Umsetzung von aminofunktionellen Polyolen mit Carbamatoalkyl-alkoxysilanen, sind vorstellbar.

Des Weiteren sind auch alkoxysilanfunktionelle Prepolymere mit einem Poly-(meth-)acrylatrückgrat bekannt. Diese werden typischerweise durch eine Copolymerisation von (Meth-)Acryloxyalkyl-alkoxysilanen mit anderen (Meth-)Acrylmonomeren und/oder weiteren ungesättigten Monomerbausteinen, wie z.B. Styrol, aufgebaut.

Zudem können alkoxysilanfunktionelle Polymere auch durch nachträgliches Aufpfropfen von ungesättigen Alkoxysilanen, z.B. von Vinyl- oder (Meth-)Acrylsilanen, hergestellt werden.

Neben einem Einsatz als Klebstoff ist auch die Verwendung von alkoxysilanfunktionellen Prepolymeren zur Herstellung von silanvernetzenden Hart- und Weichschäumen, insbesondere von isocyanatfreien spraybaren Montageschäumen bekannt und z.B. in EP 1 098 920 B1 oder EP 1 363 960 B1 beschrieben. Diese Sprayschäume werden typischerweise aus Spraydosen appliziert und dienen vor allem zum Abdichten von Fensterfugen, als Füll- und Befestigungsmaterial für Türzargen oder allgemein zum Verfüllen und Abdichten von Hohlräumen im Bauwerk. Entsprechend dieser Anwendungen zeichnen sich durch eine möglichst niedrige Schaumdichte, d.h. einer möglichst großen Volumenausbeute pro Schaumdose und damit einer möglichst großen Ergiebigkeit aus. Die niedrigen Schaumdichten werden dabei durch eine Zugabe von einer möglichst großen Menge physikalischer Treibmittel (d.h. in der Schaumdose unter Druck verflüssigter Gase, die beim Sprayprozess die Schaumbildung treiben) erreicht.

Für einen Einsatz in herkömmlichen Klebeanwendungen sind derartige Sprayschäume ungeeignet, vor allem weil sie nach ihrer Verschäumung zunächst über keine nennenswerte Anfangsmechanik verfügen und die zu verklebenden Werkstücke dementsprechend über extrem lange Zeiträume fixiert werden müssten.

Aufgabe der vorliegenden Erfindung ist es daher, die genannten Nachteile des Standes der Technik zu überwinden.

Gegenstand der Erfindung ist ein Verfahren zum Verkleben von Oberflächen, bei dem eine schäumbare Mischung (M), die
(A) Prepolymere (A) mit Gruppen der allgemeinen Formel [1]

   -A-(CH₂)ₓ-SiR¹ₐ(OR²)₃₋ₐ [1],

   wobei
   - **A**: eine zweibindige Bindegruppe ausgewählt aus -O-, -S-, -(R³)N-, -NH-CO-O-, O-CO-NH, -NH-CO-N(R³)-, N(R³)-CO-NH, oder ein Stickstoffatom, das Teil eines Heterocyclus ist,
   - **R¹**: einen gegebenenfalls halogensubstituierten Alkyl-, Cycloalkyl-, Alkenyl- oder Arylrest mit 1-10 Kohlenstoffatomen,
   - **R²**: Wasserstoff, einen Alkylrest mit 1-6 Kohlenstoffatomen oder einen ω-Oxaalkyl-alkylrest mit insgesamt 2-10 Kohlenstoffatomen und
   - **R³**: Wasserstoff, einen gegebenenfalls halogensubstituierten cyclischen, linearen oder verzweigten C₁ bis C₁₈-Alkyl- oder Alkenylrest oder einen C₆ bis C₁₈ Arylrest darstellt und
   - **x**: für eine Zahl von 1-10 und
   - **a**: für eine Zahl von 0 bis 2 steht, und
(B) Treibmittel (B) enthält,
   auf einer der zu verklebenden Oberflächen oder zwischen den zu verklebenden Oberflächen zu einem Schaum (MS) verschäumt wird, oder aber der aus der Mischung (M) herstellbare Schaum (MS) nach der Verschäumung auf einer der zu verklebenden Oberflächen oder zwischen den zu verklebenden Oberflächen aufgebracht wird, und der Schaum (MS) anschließend zwischen den zu verklebenden Oberflächen zerdrückt wird, wobei des Schaum (MS), wenn er zwischen zwei zu verklebenden planparallelen Flächen zerdrückt werden ist, zu weniger als 60% seines Volumens aus Gasblasen besteht.

Die zu verklebenden Oberflächen werden bei dem Verfahren vorzugsweise aufeinandergepresst. Das Aufbringen der schäumbaren Mischung (M) erfolgt vorzugsweise aus einer Druckdose, wobei die Schaumbildung durch das in der Mischung (M) enthaltene Treibmittel erfolgt.

Beim Zusammendrücken der zu verklebenden Oberflächen wird die Schaumstruktur des Schaumes (MS) zumindest weitgehend zerstört. Dementsprechend besteht der Schaum (MS), wenn er zwischen zwei zu verklebenden planparallelen Flächen zerdrückt worden ist, zu weniger als 60% seines Volumens, besonders bevorzugt zu weniger als 40 % seines Volumens und insbesondere bevorzugt zu weniger als 20 % seines Volumens aus Gasblasen.

Bei einer bevorzugten Ausführungsform wird wenigstens eine der zu verklebenden Oberflächen vor der erfindungsgemäßen Anwendung des Schaumes (MS) angefeuchtet. Ganz besonders bevorzugt wird eine der zu verklebenden Oberflächen angefeuchtet, während der der Schaum (MS) auf der jeweils anderen Oberfläche appliziert wird. Anschließend wird der Schaum (MS) zwischen beiden Oberflächen zerdrückt.

Der Erfindung liegt die überraschende Entdeckung zugrunde, dass der Schaum (MS) eine erstaunlich hohe Anfangsfestigkeit aufweist, wenn er auf einer der zu verklebenden Oberflächen aufgetragen wird und anschließend durch festes Aufeinanderpressen dieser Oberflächen zerdrückt wird. Dies unterscheidet ihn ganz grundlegend von den im Stand der Technik beschriebenen spraybaren Montageschäumen, die als Schäume mit sehr niedriger Dichte nur eine geringe Anfangsmechanik aufweisen. Die anfängliche Klebkraft des Schaums (MS) hingegen ist - eine hinreichende Haftung auf den jeweiligen Oberflächen vorausgesetzt - vorzugsweise bereits nach spätestens 10 min, bevorzugt nach 5 min und besonders bevorzugt bereits nach 2 bzw. 1 min, bereits so groß, dass die Klebenaht bereits mit einer dauerhaften Zugspannung (Zugkraft senkrecht zur Klebefläche) und/oder einer Scherspannung (Zugkraft parallel zur Klebefläche) von 500 N/m², bevorzugt von mindestens 1000 N/m² und besonders von mindestens 1500 N/m² belastet werden kann.

Die hohe Anfangsfestigkeit des Schaumes (MS) ist dabei auf ein auch den Fachmann überraschendes Phänomen zurückzuführen. So baut sich die Klebkraft des Schaumes (MS) - anders als bei konventionellen silanvernetzenden Klebstoffen - nicht nur durch die chemische Silanvernetzung auf. Stattdessen zeigt sich hier neben diesem chemischen Härtungsprozess zusätzlich noch ein bemerkenswerter physikalischer Effekt, wie er ansonsten nur von Kontaktklebstoffen bekannt ist, bei denen der Festigkeitsaufbau nur durch die Verdampfung zugesetzter Lösungsmittel erfolgt. Beim Schaum (MS) wird die Funktion dieser Lösungsmittel durch das Treibmittel bzw. die Treibmittelmischung übernommen. Anders als bei den nur sehr langsam härtenden Kontaktklebern verdampfen die Treibmittel jedoch nicht gemächlich sondern zu großen Teilen schlagartig bereits beim Verschäumen der schäumbaren Mischung (M). Dabei schäumen sie diese zum Schaum (MS) auf, wobei der Schaum (MS) trotz einer nach dem Verdampfen des Treibmittels sehr hohen Viskosität überraschenderweise äußerst beweglich bleibt, so dass sich der Schaum (MS) durch das Aufeinanderpressen der zu verklebenden Oberflächen problemlos zerdrücken lässt. Beim Zerdrücken des Schaumes (MS) entsteht zwischen den zu verklebenden Oberflächen eine gleichmäßige und dünne Klebstoffschicht, und die Oberflächen werden gut benetzt, so daß eine optimale Klebewirkung erreicht werden kann. Diese wird anschließend durch die ablaufenden chemischen Härtungsreaktionen weiter verstärkt.

Einen weiteren völlig überraschenden Effekt stellt zudem die Tatsache dar, dass unerwünschte Reste an Schaum (MS), wie sie z.B. entstehen, wenn überschüssige Mengen an Schaum (MS) beim Zusammenpressen der zu verklebenden Flächen aus der Klebefuge herausgepresst werden, vergleichsweise leicht entfernbar sind. Offensichtlich sind Oberflächenbenetzung und Haftung des Schaumes (MS) an Stellen, an denen die Schaumstruktur nicht zerdrückt damit nicht zerstört wird, deutlich verringert.

Besonders bevorzugt enthält die schäumbare Mischung (M) hochreaktive Prepolymere (A), z.B. Prepolymere mit Silanfunktionen der allgemeinen Formel [1] mit **X** = 1, und/oder geeignete Katalysatoren, so dass der schäumbare Klebstoff eine Klebfreizeit von <20 min, vorzugsweise <10 min und besonders bevorzugt <5 bzw. <2 min aufweist. Hier zeigt sich ein weiterer überraschender Effekt. So behalten derart hochreaktive Schäume (MS) auch dann noch ihre Klebkraft, wenn die Zeit zwischen dem vollständigen oder auch nur teilweisen Ausbringen des Schaumes (MS) und dem Zusammenfügen der zu verklebenden Werkstücke in der Größenordnung der Klebfreizeit oder sogar darüber liegt. Herkömmliche silanvernetzende Klebstoffe sind nach diesem Zeitintervall wortwörtlich "klebfrei". Die Verarbeitung von hochreaktiven konventionellen Klebstoffen ist dementsprechend schwierig und wenig komfortabel. Dahingegen weisen hochreaktive Schäume (MS) dramatisch erhöhte Verarbeitungszeiten auf. Offensichtlich behält der Schaum (MS) seine auf der feinen Schaumstruktur beruhenden Beweglichkeit und damit verbundene Fähigkeit zur Oberflächenbenetzung unter Druck auch dann, wenn der ausgebrachte Schaumes (MS) oberflächlich eine klebfreie Schicht ausgebildet hat, die jedoch beim Zerdrücken des Schaumes (MS) zwischen den zu verklebenden Werkstücken aufplatzt, wodurch noch unvernetzte Prepolymere (A) freigesetzt und in Kontakt mit den zu verklebenden Oberflächen gebracht werden.

Begünstigt wird die hohe anfängliche Klebkraft des Schaumes (MS) durch eine möglichst hohe Schaumdichte.

Bevorzugt liegt der Gehalt der Treibmittel (B) bezogen auf die gesamte Mischung (M) bei maximal 10 Gew.-%, besonders bevorzugt bei maximal 7 Gew.-%.

Als Reste **R¹** werden Methyl-, Ethyl- oder Phenylgruppen bevorzugt. Bei den Resten **R²** handelt es sich bevorzugt um Methyl- oder Ethylgruppen und als Rest **R³** werden Wasserstoff, Alkylreste mit 1-4 Kohlenstoffatomen, Cyclohexyl- oder Phenylreste bevorzugt. **A** stellt vorzugsweise eine Urethan- oder Harnstoffgruppe der Formeln -NH-CO-O-, O-CO-NH, -NH-CO-N(R³)- oder N(R³)-CO-NH dar. **a** steht vorzugsweise für 0 oder 1 während für **x** die Zahlen 1 oder 3 bevorzugt werden.

Besonders bevorzugt steht **x** für die Zahl 1, d.h. es handelt sich um Alkoxysilylgruppen, die nur durch einen Methylspacer von einem Heteroatom mit mindestens einem freien Elektronenpaar getrennt sind. Dadurch besitzen diese Prepolymere eine extrem hohe Reaktivität gegenüber (Luft-) Feuchtigkeit, so dass sie zu Polymerabmischungen verarbeitet werden können, die auch mit wenig oder sogar ohne schwermetallhaltige Katalysatoren, insbesondere ohne Zinnkatalysatoren, aushärten. Zudem härten die aus diesen Prepolymeren herstellbaren Schäume (MS) bereits bei Raumtemperatur mit sehr hoher Geschwindigkeit aus, so dass sie in kürzester Zeit eine hohe Klebkraft entwickeln. Die mit derartigen Materialien verklebten Werkstücke müssen nur extrem kurz, vorzugsweise weniger als 5 min fixiert werden.

Die Hauptketten der alkoxysilanterminierten Prepolymere (A) können verzweigt oder unverzweigt sein, wobei unverzweigte oder nur schwach verzweigte Hauptketten bevorzugt werden. Die mittleren Kettenlängen können beliebig, entsprechend der jeweils gewünschten Eigenschaften sowohl der unvernetzten Mischung (M) als auch der ausgehärteten Masse, angepasst werden. Die Prepolymere (A) sind bei Raumtemperatur vorzugsweise flüssig bzw. zähflüssig und weisen vorzugsweise Viskositäten von 1 bis 1000 Pas, vorzugsweise 10-700 Pas und besonders bevorzugt von 50 bis 500 Pas auf.

Die Prepolymere (A) werden vorzugsweise aus Silanen (S), Polyolen (P) sowie gegebenenfalls Di- oder Polyisocyanaten (I) aufgebaut.

Als Silane (S) werden dabei vorzugsweise Verbindungen der allgemeinen Formeln [2] und [3] eingesetzt

OCN-(CH₂)_{X}-SiR¹ₐ(OR²)₃₋ₐ [2]

Z-(CH₂)_{X}-SiR¹ₐ(OR²)₃₋ₐ [3],

wobei
**Z** eine OH-, SH- oder eine NHR³-Gruppe bedeutet und die übrigen Variablen die oben angegebenen Bedeutungen besitzen.

Beim Einsatz von Silanen (S) der allgemeinen Formel [2] werden diese bevorzugt mit Polyolen (P) oder aber isocyanatreaktiven Reaktionsprodukten aus Polyolen (P) und Poly- oder Diisocyanaten (I) umgesetzt. Im letztgenannten Fall ist die Reihenfolge der Reaktionsschritte beliebig, d.h. die Reaktion der Silane (S) entsprechend der Formel (2) mit den Polyolen (P) kann vor, nach oder auch gleichzeitig mit der Reaktion zwischen Polyol (P) und dem Isocyanat (I) erfolgen.

Beim Einsatz von Silanen (S) der allgemeinen Formel [3] werden diese mit NCO-terminierten Prepolymeren umgesetzt, wie sie vorzugsweise durch eine Reaktion von Polyolen (P) mit Isocyanaten (I) zugänglich sind. Auch hier ist die Reihenfolge der einzelnen Reaktionsschritte zur Herstellung des Prepolymeren (A) selbstverständlich beliebig. Prinzipiell ist auch eine kontinuierliche Prepolymerherstellung, z.B. in einem Röhrenreaktor, vorstellbar. Eine gesonderte Reinigung oder sonstige Aufarbeitung der Prepolymere (A) ist in der Regel nicht erforderlich.

Als Polyole (PP) für die Herstellung der Prepolymere (A) können prinzipiell sämtliche Polyole (PP) mit mindestens einer, bevorzugt mindestens zwei Hydroxylgruppen und mit einem mittleren Molekulargewicht Mₙ von 200 bis 30000 eingesetzt werden. Dabei kann es sich beispielsweise um hydroxylfunktionelle Polyether, Polyester, Polyacrylate und - methacrylate, Polycarbonate, Polystyrole, Polysiloxane, Polyamide, Polyvinylester, Polyvinylhydroxide oder Polyolefine wie z.B. Polyethylen, Polybutadien, Ethylen-Olefincopolymere oder Styrol-Butadiencopolymere handeln. Bevorzugt werden Polyole (PP) mit einem mittleren Molekulargewicht Mₙ von 400 bis 25000, besonders bevorzugt von 1000 bis 20000 eingesetzt. Besonders geeignete Polyole (PP) sind aromatische und/oder aliphatische Polyesterpolyole und Polyetherpolyole, wie sie in der Literatur vielfach beschrieben sind. Die als Polyole (PP) eingesetzten Polyether und/oder Polyester können dabei sowohl linear als auch verzweigt sein, wobei jedoch unverzweigte, lineare Polyole bevorzugt werden. Zudem können Polyole (PP) auch Substituenten wie z.B. Halogenatome besitzen. Selbstverständlich ist auch der Einsatz beliebiger Mischungen der verschiedenen Polyoltypen möglich. Besonders bevorzugt werden jedoch lineare Polyetherpolyole mit zwei Hydroxylgruppen als Polyole (PP) verwendet, wobei vor allem Polypropylenglycole eine besonders hohe Eignung zeigen.

Des Weiteren können aber auch sämtliche monomere Alkohole (PM) mit mindestens einer bevorzugt mindestens zwei oder mehr OH-Funktionen sowie auch hydroxyalkyl- oder aminoalkylterminierte Polysiloxane (PS) als Polyole (P) eingesetzt werden. Ebenso können selbstverständlich auch sämtliche Mischungen aus polymeren Polyolen (PP), monomeren Alkoholen (PM) sowie Polysiloxanen (PS) als Polyolkomponente (P) verwendet werden.

Beispiele für monomere Alkohole (PM) mit mindestens zwei OH-Funktionen wären Verbindungen wie Ethylenglycol, Glycerin, die verschiedenen Propan-, Butan-, Pentan- oder Hexandiolisomeren, die verschiedenen Pentosen und Hexosen sowie deren Derivate oder auch Pentaerythritol zu nennen. Als hydroxyalkyl- oder aminoalkylterminierte Polysiloxane (PS) werden bevorzugt Verbindungen der allgemeinen Formel [4]

Z-R⁵-[Si(R⁴)₂-O-]ₙ-Si(R⁴)₂-R⁵-Z [4]

eingesetzt, in der
- **R⁴**: einen Kohlenwasserstoffrest mit 1 bis 12 Kohlenstoffatomen, bevorzugt Methylreste,
- **R⁵**: eine verzweigte oder unverzweigte Kohlenwasserstoffkette mit 1-12 Kohlenstoffatomen, bevorzugt Propylenkette und
- **n**: eine Zahl von 1 bis 2000, bevorzugt eine Zahl von 5 bis 100 bedeuten und
- **Z**: die vorstehenden Bedeutungen aufweist.

Als Di- oder Polyisocyanate (I) für die Herstellung der isocyanatfunktionellen Prepolymere (A) können prinzipiell sämtliche gebräuchlichen Isocyanate eingesetzt werden, wie sie in der Literatur vielfach beschrieben sind. Gängige Diisocyanate sind beispielsweise Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI), perhydriertes MDI (H-MDI) oder auch von Hexamethylendiisocyanat (HDI). Beispiele für Polyisocyanate sind polymeres MDI (P-MDI), Triphenylmethantriisocanat oder auch die Isocyanurat- oder Biuret-trimerisate der oben genannten monomeren Diisocyanate. Sämtliche Di- und/oder Polyisocyanate können einzeln oder auch in Mischungen eingesetzt werden. Bevorzugt werden jedoch ausschließlich Diisocyanate eingesetzt. Falls die UV-Stabilität der Prepolymere (A) oder der aus diesen Prepolymeren hergestellten ausgehärteten Materialien auf Grund der jeweiligen Anwendung von Bedeutung ist, werden bevorzugt aliphatische Isocyanate als Komponente (I) verwendet.

In einer bevorzugten Ausführungsform der Erfindung werden als Isocyanatkomponenten (I) aromatische Isocyanate und als Silankomponente (S) Verbindungen der Formel [3] mit **x** = 1 eingesetzt. Ganz besonders bevorzugt steht **Z** dabei für eine NHR³-Gruppe. Die dabei erhaltenen Prepolymere (A) zeichnen sich überraschenderweise durch eine nochmals höhere Reaktivität aus - selbst im Vergleich mit anderen ohnehin schon hochreaktiven Prepolymeren (A) mit Silanfunktionen der Formel [1] mit **x** = 1. So besitzen diese speziellen extrem hochreaktiven Prepolymere selbst ohne Zugabe eines gesonderten Katalysators in der Regel eine Klebfreizeit von <10 min, typischerweise <5 min.

Die Herstellung der Prepolymere (A) erfolgt vorzugsweise durch ein einfaches Zusammengeben der beschriebenen Komponenten, wobei gegebenenfalls noch ein Katalysator zugegeben und/oder bei erhöhter Temperatur gearbeitet werden kann.

Die Konzentrationen aller an sämtlichen Reaktionsschritten beteiligter Isocyanatgruppen und aller isocyanatreaktiver Gruppen sowie die Reaktionsbedingungen sind dabei vorzugsweise so gewählt, dass im Laufe der Prepolymersynthese sämtliche Isocyanatgruppen abreagieren. Das fertige Prepolymer (A) ist somit vorzugsweise isocyanatfrei. Des Weiteren sind die Konzentrationsverhältnisse sowie die Reihenfolge der Reaktionsschritte und die Reaktionsbedingungen bevorzugt so gewählt, dass nahezu sämtliche Kettenenden der Prepolymere (A) (bevorzugt > 80 % der Kettenenden, besonders bevorzugt > 90 % der Kettenenden) mit Alkoxysilylgruppen der allgemeinen Formel [1] terminiert sind.

Die bei der Herstellung der Prepolymere (A) auftretenden Reaktionen zwischen Isocyanatgruppen und isocyanatreaktiven Gruppen können gegebenenfalls durch einen Katalysator (K) beschleunigt werden. Zu diesem Zwecke können die üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., verwendet werden. Des Weiteren können auch Bismutkatalysatoren, z.B. der Borchi-Katalysator, Titanate, z.B. Titan(IV)isopropylat, Eisen(III)-Verbindungen, z.B. Eisen(III)-acetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholinin etc., eingesetzt werden. Auch organische oder anorganische Brönstedsäuren wie Essigsäure, Trifluoressigsäure oder Benzoylchlorid, Salzsäure, Phoshorsäure deren Mono- und/oder Diester, wie z.B. Butylphosphat, (Iso-) Propylphosphat, Dibutylphosphat etc., sind als Katalysatoren (K) geeignet. Selbstverständlich können auch Kombinationen mehrerer Katalysatoren eingesetzt werden.

Ein weiteres Verfahren zur Herstellung von alkoxysilanfunktionellen Prepolymeren (A) stellt die Copolymersisation von Silanen mit mindestens einer ungesättigten Gruppe, z.B. von Vinylsilanen oder (Meth-) Acryloxyalkysilanen, mit anderen (Meth-)Acrylmonomeren und/oder weiteren ungesättigten Monomerbausteinen, wie z.B. Styrol, dar. Zudem können die Prepolymere (A) auch durch nachträgliches Aufpfropfen von ungesättigen Alkoxysilanen, z.B. von Vinyl- oder (Meth-)Acryloxyalkylsilanen, hergestellt werden. Die entsprechenden Verfahren sowohl zur Copolymerisation als auch zur Pfropfung sind bekannt und in der einschlägigen Literatur vielfach beschrieben.

Als Treibmittel (B) sind dieselben bereits bei relativ geringen Drücken kondensierbaren Gase geeignet, die auch zur Herstellung spraybarer Montageschäume verwendet werden. Gängige Treibmittel sind beispielsweise Kohlenwasserstoffe mit jeweils 1-5, insbesondere 3-5 Kohlenstoffatomen, insbesondere Propan-Butan-Mischungen oder Isobutan, Fluorkohlenwasserstoffe mit 1-5 Kohlenstoffatomen, z.B. 1,1,1,2 Tetraflourethan oder 1,1 Difluorethan, oder Dimethylether sowie entsprechende Mischungen. Der Treibmittelgehalt liegt vorzugsweise bei <10 Gew.-%, besonders bevorzugt bei <7 bzw. <5 Gew.-% bezogen auf die gesamte Mischung (M).

Als weitere Komponenten (C) können die Mischungen (M) vorzugsweise weitere Silane (S1), Füllstoffe (F), Lösungsmittel (L), Schaumstabilisatoren (Stab) sowie Katalysatoren (K1) zur Beschleunigung der Aushärtung des Schaumes (MS) enthalten.

Als weitere Silane (S1) können dabei prinzipiell sämtliche Silane eingesetzt werden, wobei jedoch Silane mit hydrolysierbaren Alkoxygruppen bevorzugt werden. In einer besonders bevorzugten Ausführungsform der Erfindung sind die Silane (S1) oder zumindest Anteile der Silane (S1) mit den bei der Prepolymerherstellung verwendeten Silanen (S) identisch. In diesem Fall wird das Silan (S) vorteilhafterweise bereits während der Synthese der Prepolymere (A) im Überschuss eingesetzt. Dieses Vorgehen inklusive der damit verbundenen Vorteile insbesondere bei der Herstellung von Prepolymeren (A) mit Silanfunktionen entsprechend der Formel [1] mit **x =** 1 ist in WO 2005/003201 beschrieben.

Die Silane (S1) können mehrere Funktionen übernehmen. So können sie beispielsweise als Wasserfänger dienen, d.h. sie sollen eventuell vorhandene Feuchtigkeitsspuren abfangen und so die Lagerstabilität der entsprechenden silanvernetzenden Massen erhöhen. Selbstverständlich müssen diese zumindest eine vergleichbar hohe Reaktivität gegenüber Feuchtigkeitsspuren besitzen wie das Prepolymer (A). Geeignet als Wasserfänger sind daher vor allen hochreaktive Alkoxysilane entsprechend der Formel [3] mit **x** = 1. Besonders bevorzugte Wasserfänger stellen Carbamatomethyl-trialkoxysilane sowie Carbamatomethylmethyldialkoxysilane dar, wobei die Methoxy- und Ethoxyderivate dieser Silantypen besonders bevorzugt werden.

Des Weiteren können die niedermolekularen Alkoxysilane (S1) auch einen Vernetzer und/oder Reaktivverdünner darstellen. Die Alkoxysilane (S1) könnten dabei zu einer Steigerung der Netzwerkdichte und damit zur Verbesserung der mechanischen Eigenschaften, z.B. der Reißfestigkeit, der ausgehärteten Masse beitragen. Zudem können sie auch die Viskosität der entsprechenden Prepolymerabmischungen senken. Diese Funktionen können prinzipiell von sämtlichen Alkoxysilanen wahrgenommen werden. Besonders geeignet sind daher preisgünstige Silane, z.B. die preisgünstigen Alkyltrimethoxysilane, wie Methyltrimethoxysilan sowie Vinyl- oder Phenyltrimethoxysilan, sowie deren Teilhydrolysate.

Zudem können die niedermolekularen Alkoxysilane (S1) auch die Funktion eines Haftvermittelers übernehmen. Hier können vor allem Alkoxysilane eingesetzt werden, die über Aminofunktionen oder Epoxyfunktionen verfügen. Als Beispiele seien γ-Aminopropyltrialkoxysilane, γ-[N-Aminoethylamino]-propyltrialkoxysilan, γ-Glycidoxy-propyltrialkoxysilane sowie sämtliche Silane entsprechend der Formel [3], bei denen **Z** für eine stickstoffhaltige Gruppe steht, genannt. Einen weiteren bevorzugten Silantyp stellen Silane der allgemeinen Formel [5]

Y-CO-NR³-(CH₂)_{X}-SiR¹ₐ(UR²)₃₋ₐ [5]

dar, wobei Y für eine OR³-, NHR³- oder N(R³)₂-Gruppe steht und sämtliche anderen Variablen die oben angegebene Bedeutung aufweisen.

Schließlich können die niedermolekularen Alkoxysilane (S1) sogar als Härtungskatalysatoren oder -cokatalysatoren dienen. Zu diesem Zweck eignen sich vor allem sämtliche basischen Aminosilane, z.B. sämtliche Silane der allgemeinen Formel [3] soweit es sich bei **Z** um eine NH₂-, NHR³-, N(R³)₂-Gruppe handelt.

Die Alkoxysilane (S1) können den Prepolymeren (A) zu jedem beliebigen Zeitpunkt zugegeben werden. Soweit sie über keine NCO-reaktiven Gruppen verfügen, können sie sogar bereits während der Synthese der Prepolymere (A) zugesetzt werden. Dabei können, bezogen auf 100 Gewichtsteile Prepolymer (A), bis zu 100 Gewichtsteile, vorzugsweise 1 bis 60 Gewichtsteile eines niedermolekularen Alkoxysilanes (S1) zugesetzt werden.

Neben den Silanen (S1) enthalten die Mischungen (M) als weitere Komponenten oftmals Füllstoffe (F) zugegeben. Die Füllstoffe (F) führen dabei zu einer erheblichen Eigenschaftsverbesserung der resultierenden Abmischungen. Vor allem die Reißfestigkeit wie auch die Bruchdehnung können durch den Einsatz von geeigneten Füllstoffen erheblich gesteigert werden. Gängige Füllstoffe (F) sind beispielsweise Calciumcarbonat, pyrogene Kieselsäure und Ruß. Die unterschiedlichen Füllstoffe (F) werden oftmals auch in Kombination eingesetzt. Als Füllstoffe (F) eigenen sich dabei sämtliche Materialien, wie sie im Stand der Technik vielfach beschrieben sind. Die Füllstoffe (F) werden bevorzugt in einer Konzentration von 0-90 Gew.-% bezogen auf die fertige Mischung (M) eingesetzt, wobei Konzentrationen von 5-70 Ges.-% besonders bevorzugt sind.

Die Mischungen (M) können zudem auch noch organische Lösungsmittel (L) enthalten, bevorzugt in geringen Mengen <10 Gew.-% bezogen auf die gesamte Mischung (M), wobei Mengen <5 Gew.-% besonders bevorzugt werden. Diese Lösungsmittel dienen dabei der Erniedrigung der Viskosität der unvernetzten Mischungen (M). Als Lösungsmittel (L) kommen prinzipiell sämtliche Lösungsmittel sowie Lösemittelmischungen in Betracht. Als Lösungsmittel (L) werden bevorzugt Verbindungen eingesetzt, die über ein Dipolmoment verfügen. Besonders bevorzugte Lösungsmittel verfügen über ein Heteroatom mit freien Elektronenpaaren, die Wasserstoffbrückenbindungen eingehen können. Bevorzugte Beispiele für solche Lösungsmittel sind Ether wie z.B. *t*-Butyl-methylether, Ester, wie z.B. Ethylacetat oder Butylacetat sowie Alkohole, wie z.B. Methanol, Ethanol sowie die verschiedenen Regioisomere des Propanols und Butanols.

Um bei Raumtemperatur eine schnelle Aushärtung der Schäume (MS) zu erreichen, kann gegebenenfalls ein Härtungskatalysator (K1) zugesetzt werden. Hier sind prinzipiell dieselben Verbindungen geeignet, die bereits als Katalysatoren (K) bei der Herstellung der Prepolymere (A) beschrieben wurden. In einer bevorzugten Ausführungsform der Erfindung dienen die bei der Prepolymerherstellung verwendeten Katalysatoren (K) gleichzeitig auch als Härtungskatalysatoren (K1). Als Schaumstabilisatoren (Stab) können dieselben Verbindungen verwendet werden, die auch zur Herstellung von herkömmlichen Montageschäumen verwendet werden. Sie sind kommerziell in großer Auswahl erhältlich und in der Literatur vielfach beschrieben.

Des Weiteren können die Mischungen (M) auch an sich bekannte Hilfsstoffe, wie von den Komponenten (S1) abweichende Wasserfänger, Haftvermittler und/oder Reaktivverdünner sowie Weichmacher (z.B. Phthalate, Benzoate, Phosphatweichmacher), Thixotropiermittel, Fungizide, Flammschutzmittel, Pigmente etc. enthalten. Auch Lichtschutzmittel, Antioxidantien, Radikalfänger sowie weitere Stabilisatoren können den Mischungen (M) zugesetzt werden. Zur Erzeugung der jeweils gewünschten Eigenschaftsprofile, sowohl der unvernetzten Mischungen (M) als auch der ausgehärteten Massen, sind derartige Zusätze in der Regel unverzichtbar.

Für die Mischungen (M) existieren zahllose verschiedene Anwendungen im Bereich der Kleb-, Dicht- und Fugendichtstoffe. Dabei sind sie für zahllose unterschiedliche Untergründe, wie z.B. mineralische Untergründe, Metalle, Kunststoffe, Glas, Keramik etc., geeignet. Prinzipiell eignen sich die Schäume (MS) zum Verkleben von jedweden Gegenständen. Vor allem aber sind sie hoch geeignet, wenn die zu verklebenden Flächen uneben sind. Dies ist z.B. beim Verkleben von Bruchstellen, die durch Absplitterungen oder Materialverbiegungen nicht mehr genau übereinander passen, der Fall, oder auch beim Verkleben von Fußleisten, Deckenleisten oder sonstigen Verzierungen auf einer unebenen Wandoberfläche. Hier besitzen die Schäume (MS) den Vorteil, auch Hohlräume gut ausfüllen zu können.

Die Mischungen (M) werden vorzugsweise als schäumbare Klebstoffe, besonders bevorzugt als 1-komponentige bei Kontakt mit Luftfeuchtigkeit und/oder Wasser härtende schäumbare Klebstoffe eingesetzt.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind in den nachstehenden Beispielen alle Mengen- und Prozentangaben auf das Gewicht bezogen, alle Drücke 0,10 MPa (abs.) und alle Temperaturen 20°C.

Als Maß für die Reaktivitäten der Prepolymere (A) ist verschiedentlich die Klebfreizeit angegeben. Darunter ist diejenige Zeitspanne zu verstehen, die nach dem Ausbringen des Prepolymers an die Luft vergeht, bis die Polymeroberfläche soweit gehärtet ist, dass nach einer Berührung dieser Oberfläche mit einem Bleistift weder Polymermasse daran haften bleibt, noch eine Fadenbildung auftritt.

### Beispiel 1:

### Herstellung eines Prepolymers (A):

In einem 1 l Reaktionsgefäß mit Rühr-, Kühl- und Heizmöglichkeiten werden 600 g (75 mol) eines Polypropylenglykols mit einem mittleren Molekulargewicht Mₙ von 8000 g/mol (Acclaim® 8000 der Fa. Bayer) vorgelegt und 60 Minuten bei 80 °C im Vakuum entwässert. Anschließend wird mit Argon belüftet die Heizung entfernt, und unter Schutzgas und starkem Rühren werden 37,5 g (150 mol) monomeres 4,4'-MDI und 0,035 g Borchi-Katalysator zugegeben. Danach wird für 120 Minuten bei 80 °C gerührt. Das erhaltene NCO-terminierte Polyurethanprepolymer wird danach auf 60 °C abgekühlt und mit 65,87 g (240 mmol) *N*-Cyclohexylaminomethyltriethoxymsilan (GENTOSIL® XL 926 der Fa. Wacker) versetzt und 60 min bei 60 °C gerührt. In der resultierenden Prepolymermischung lassen sich IR-spektroskopisch keine Isocyanatgruppen mehr nachweise. Man erhält ein leicht trübes Prepolymer, das sich bei 20 °C mit einer Viskosität von 298 Pas problemlos weiterverarbeiten lässt.

### Beispiel 2: Herstellung einer erfindungsgemäßen Mischung (M):

In einer herkömmliche Druckdose mit einem Füllvolumen von ca. 100 ml werden 60 g des nach Beispiel 1 hergestellten Prepolymers und 1,44 g des Schaumstabilisators Tegostab^{®} B8443 (Produkt der Fa. Goldschmidt) eingewogen. Anschließend wird die Dose mit einem herkömmlichen Ventil, wie es auch bei Druckdosen für herkömmliche spraybare Montageschäume verwendet wird verschlossen. Es werden 3 ml Propan/Butan und 3 ml Diethylether als Treibmittel zugesetzt. Anschließend wird die Dose gut geschlüttelt. Die Dose wird vorzugsweise auf dem Kopf stehend gelagert.

### Beispiel 3: Applikation der erfindungsgemäßen Mischung (M):

Die nach Beispiel 2 hergestellte schäumbare Mischung (M) wird auf zwei Prüfkörper aus Holz mit einer 3 x 9 cm großen Klebefläche ausgesprüht. Von diesen wird anschließend einer auf eine verputzte und mit herkömmlicher Wandfarbe gestrichenen Oberfläche und der andere auf einer Holzoberfläche geklebt. Die Klebeflächen werden für jeweils wenige Sekunden fest aufeinandergedrückt. Nach ca. 1 min wird noch ein zweites Mal für wenige Sekunden nachgerückt.

Nach 2 min werden die Klebeflächen mit einer Zugspannung von 5 N dauerhaft belastet, ohne daß sich die Klebeverbindung löst.

Der Versuch wird exakt wiederholt, nur dass die Klebeflächen dieses Mal nach 3 min mit einer Scherspannung von 5 N dauerhaft belastet werden. Dabei kommt es zu keiner erkennbaren Verschiebung zwischen den verklebten Oberflächen.

### Beispiel 4:

### Herstellung eines Prepolymers (A):

In einem 2 l Reaktionsgefäß mit Rühr-, Kühl- und Heizmöglichkeiten werden 487,8 g (2,8 mol) monomeres TDI (80/20 Mischung aus 2,4- und 2,6-TDI) vorgelegt und auf 80 °C erwärmt. Anschließend werden unter Schutzgas und starkem Rühren 1 g Phosphorsäure und 595,0 g (1,4 mol) eines Polypropylenglykols mit einem mittleren Molekulargewicht von 425 g/mol innerhalb von ca. 45 min zugegeben, wobei sich die Mischung trotz Kühlung im Eisbad um ca. 20 °C erwärmt. Es wird für 60 min bei 80 °C nachgerührt. Das erhaltene NCO-terminierte Polyurethanprepolymer wird auf 70 °C abgekühlt und mit 1,8 g Jeffcat^{®} DMDLS (Produkt der Fa. Huntsman) und 90,0 g Vinyltrimethoxysilan (GENIOSIL^{®} XL 10 der Fa. Wacker) versetzt. Anschließend werden innerhalb von 90 min unter Kühlung 562,1 g (2,66 mol) *N*-Phenylaminomethylmethyldimethoxysilan (GENIOSIL^{®} XL 972 der Fa. Wacker) zugegeben, wobei die Temperatur unter 75 °C bleibt. Es wird für 60 min bei 70 °C nachgerührt. In der resultierenden Prepolymermischung lassen sich IR-spektroskopisch keine Isocyanatgruppen mehr nachweisen. Man erhält ein klares Prepolymer, das sich bei 20 °C mit einer Viskosität von 512 Pas problemlos weiterverarbeiten lässt.

### Beispiel 5: Herstellung einer erfindungsgemäßen Mischung (M):

In einer herkömmlichen Druckdose mit einem Füllvolumen von ca. 100 ml werden 50 g des nach Beispiel 4 hergestellten Prepolymers, 1,2 g des Schaumstabilisators Tegostab^{®} B8443 (Produkt der Fa. Goldschmidt) und 0,3 g Butylphosphat eingewogen. Anschließend wird die Dose mit einem herkömmlichen Ventil, wie es auch bei Druckdosen für herkömmliche spraybare Montageschäume verwendet wird verschlossen. Es werden 2 ml Propan/Butan und 2 ml Dimethylether als Treibmittel zugesetzt.

Anschließend wird die Dose gut geschüttelt. Die Dose wird vorzugsweise auf dem Kopf stehend gelagert.

### Beispiel 6: Applikation der erfindungsgemäßen Mischung (M):

Die nach Beispiel 5 hergestellte schäumbare Mischung (M) wird auf zwei Prüfkörper aus Holz mit einer 3 x 9 cm großen Klebefläche ausgesprüht. Von diesen wird anschließend einer auf eine verputzte und mit herkömmlicher Wandfarbe gestrichenen Oberfläche und der andere auf einer Holzoberfläche geklebt. Die Klebeflächen werden für jeweils wenige Sekunden fest aufeinandergedrückt. Nach ca. 1 min wird noch ein zweites Mal für wenige Sekunden nachgerückt.

Nach 2 min werden die Klebeflächen mit einer Zugspannung von 5 N dauerhaft belastet, ohne daß sich die Klebeverbindung löst.

## Patentansprüche

1. Verfahren zum Verkleben von Oberflächen, bei dem eine schäumbare Mischung (M), die
(A) Prepolymere (A) mit Gruppen der allgemeinen Formel [1]
-A-(CH₂)ₓ-SiR¹ₐ(OR²)₃₋ₐ [1],
wobei
**A** eine zweibindige Bindegruppe ausgewählt aus -O-, -S-, -(R³)N-, -NH-CO-O-, O-CO-NH, -NH-CO-N(R³)-, N(R³)-CO-NH, oder ein Stickstoffatom, das Teil eines Heterocyclus ist,
**R¹** einen gegebenenfalls halogensubstituierten Alkyl-, Cycloalkyl-, Alkenyl- oder Arylrest mit 1-10 Kohlenstoffatomen,
**R²** Wasserstoff, einen Alkylrest mit 1-6 Kohlenstoffatomen oder einen ω-Oxaalkyl-alkylrest mit insgesamt 2-10 Kohlenstoffatomen und
**R³** Wasserstoff, einen gegebenenfalls halogensubstituierten cyclischen, linearen oder verzweigten C₁ bis C₁₈-Alkyl- oder Alkenylrest oder einen C₆ bis C₁₈ Arylrest darstellt und
**x** für eine Zahl von 1-10 und
**a** für eine Zahl von 0 bis 2 steht, und
(B) Treibmittel (B) enthält,
auf einer der zu verklebenden Oberflächen oder zwischen den zu verklebenden Oberflächen zu einem Schaum (MS) verschäumt wird, oder aber der aus der Mischung (M) herstellbare Schaum (MS) nach der Verschäumung auf einer der zu verklebenden Oberflächen oder zwischen den zu verklebenden Oberflächen aufgebracht wird,
und der Schaum (MS) anschließend zwischen den zu verklebenden Oberflächen zerdrückt wird, wobei der Schaum (MS), wenn er zwischen zwei zu verklebenden planparallelen Flächen zerdrückt worden ist, zu weniger als 60% seines Volumens aus Gasblasen besteht.

2. Verfahren nach Anspruch 1, wobei **x** die Zahl 1 bedeutet.

3. Verfahren nach Anspruch 1, wobei die schäumbare Mischung (M) weitere Komponenten (C), die ausgewählt werden aus weiteren Silane (S1), Füllstoffe (F), Lösungsmittel (L), Schaumstabilisatoren (Stab) sowie Katalysatoren (K1) zur Beschleunigung der Aushärtung des Schaumes (MS) enthalten.

4. Verfahren nach Anspruch 3, wobei die Füllstoffe (F) ausgewählt werden aus Calciumcarbonat, pyrogener Kieselsäure und Ruß.

## Claims

1. Method for adhesive bonding of surfaces wherein a foamable mixture (M) which contains
(A) prepolymers (A) having groups of the general formula [1]
-A-(CH₂)ₓ-SiR¹ₐ(OR²)₃₋ₐ [1]
in which
**A** is a divalent binding group selected from -O-, -S-, -(R³)N-, -NH-CO-O-, O-CO-NH, -NH-CO-N(R³)-, (N(R³)-CO-NH, or a nitrogen atom which is part of a heterocycle,
**R¹** is an optionally halogen-substituted alkyl, cycloalkyl, alkenyl or aryl radical having 1-10 carbon atoms,
**R²** is hydrogen, an alkyl radical having 1-6 carbon atoms or an ω-oxaalkyl-alkyl radical having altogether 2-10 carbon atoms and
**R³** is hydrogen, an optionally halogen-substituted cyclic, linear or branched C₁ to C₁₈ alkyl or alkenyl radical or a C₆ to C₁₈ aryl radical and
**x** is a number from 1 to 10 and
**a** is a number from 0 to 2, and
(B) blowing agents (B),
is foamed on one of the surfaces to be adhesively bonded or between the surfaces to be adhesively bonded to give a foam (MS) or the foam (MS) which can be prepared from the mixture (M) is applied after foaming on one of the surfaces to be adhesively bonded or between the surfaces to be adhesively bonded,
and the foam (MS) is then pressed between the surfaces to be adhesively bonded,
the foam (MS) when it has been pressed between two plane-parallel surfaces to be adhesively bonded comprising less than 60% of gas bubbles, based on its volume.

2. Method according to Claim 1 wherein x is the number 1.

3. Method according to Claim 1 wherein the foamable mixture (M) contains further components (C) which are selected from further silanes (S1), fillers (F), solvents (L), foam stabilizers (Stab) and catalysts (K1) for accelerating the curing of the foam (MS).

4. Method according to Claim 3 wherein the fillers (F) are selected from calcium carbonate, fumed silica and carbon black.

## Revendications

1. Procédé pour le collage de surfaces, dans lequel on transforme en mousse un mélange expansible (M) qui contient
(A) des prépolymères (A) comportant des groupes de formule générale [1]
-A-(CH₂)ₓ-SiR¹ₐ(OR²)₃₋ₐ [1]
dans laquelle
**A** représente un groupe de liaison à deux liaisons, choisi parmi -O-, -S-, -(R³)N-, -NH-CO-O-, -O-CO-NH-, -NH-CO-N(R³)-, N(R³)-CO-NH, ou un atome d'azote qui fait partie d'un hétérocycle,
**R¹** représente un radical alkyle, cycloalkyle, alcényle ou aryle ayant de 1 à 10 atomes de carbone, éventuellement substitué par halogène,
**R²** représente un atome d'hydrogène, un radical alkyle ayant de 1 à 6 atomes de carbone ou un radical ω-oxaalkyl-alkyle ayant au total de 2 à 10 atomes de carbone et
**R³** représente un atome d'hydrogène, un radical alkyle ou alcényle en C₁-C₁₈ cyclique, linéaire ou ramifié, éventuellement substitué par halogène, ou un radical aryle en C₆-C₁₈ et
**x** représente un nombre de 1 à 10 et
**a** représente un nombre de 0 à 2, et
(B) un agent d'expansion (B),
sur l'une des surfaces à coller ou entre les surfaces à coller, en une mousse (MS), ou bien après la transformation en mousse on applique sur l'une des surfaces à coller ou entre les surfaces à coller la mousse (MS) pouvant être obtenue à partir du mélange (M),
et ensuite on presse la mousse (MS) entre les surfaces à coller, la mousse (MS) consistant, lorsqu'elle a été pressée entre deux surfaces plan-parallèles à coller, en bulles de gaz à raison de moins de 60 % de son volume.

2. Procédé selon la revendication 1, dans lequel x représente le nombre 1.

3. Procédé selon la revendication 1, dans lequel le mélange expansible (M) contient d'autres composants (C) qui sont choisis parmi d'autres silanes (S1), des charges (F), des solvants (L), des stabilisants de mousse (Stab) ainsi que des catalyseurs (K1) pour l'accélération du durcissement de la mousse (MS).

4. Procédé selon la revendication 3, dans lequel les charges (F) sont choisies parmi le carbonate de calcium, l'acide silicique pyrogéné et le noir de carbone.
